# EUROPÄISCHE PATENTSCHRIFT

(11) **EP 0 708 109 B1**
(45) Veröffentlichungstag und Bekanntmachung des Hinweises auf die Patenterteilung: **01.03.2000**
(21) Anmeldenummer: 95114369.2
(22) Anmeldetag: 13.09.1995
(51) Int. Cl.: C07F 9/6574, C07F 9/6568, C07F 9/6571, C07F 9/38, C07F 9/53

(54) **Verfahren zur Herstellung phosphorhaltiger Dicarbonsäuren**
Process for the preparation of dicarbonic acids containing phosphorus
Procédé de préparation d'acides dicarboniques contenant du phosphore

(30) Priorität: 10.10.1994 DE 4436079
(43) Veröffentlichungstag der Anmeldung: 24.04.1996
(73) Patentinhaber: Clariant GmbH, 65929 Frankfurt am Main (DE)
(72) Erfinder: Kleiner, Hans-Jerg, Dr., D-61476 Kronberg (DE)

(56) Entgegenhaltungen:
- EP-A- 0 665 237
- FR-A- 2 387 276
- US-A- 4 157 436
- CHEMICAL ABSTRACTS, vol. 88, no. 17, 1978, Columbus, Ohio, US; abstract no. 121383c, & JP-A-52 144 627 (TOYOBO CO., LTD.)

## Beschreibung

Die vorliegende Erfindung betrifft ein gegenüber dem Stand der Technik verbessertes Verfahren zur Herstellung phosphorhaltiger Dicarbonsäuren.

Phosphorhaltige Dicarbonsäuren stellen wertvolle Bausteine für die Herstellung von polymeren Kunststoffen dar. Setzt man phosphorhaltige Dicarbonsäuren als Comonomere beispielsweise bei der Herstellung von Polyestern ein, so lassen sich schwer entflammbare Polyester gewinnen (DE-PS 26 46 218). Darüber hinaus lassen sich phosphorhaltige Dicarbonsäuren zur Herstellung von Harzmassen mit flammhemmender Wirkung verwenden (DE-PS 28 16 100).

Derartige phosphorhaltige Dicarbonsäuren erhält man, indem man eine geeignete phosphorhaltige Verbindung, beispielsweise 6H-Dibenz-[c,e][1,2]-oxaphosphorin-6-on, an Fumarsäure, Maleinsäure oder Itaconsäure anlagert. Die Anlagerung erfolgt unter Vermischen der Einsatzstoffe und unter Erhitzen der dabei resultierenden Mischung auf Temperaturen von 100 bis 250°C. Allerdings treten bei Durchführung der Reaktion, insbesondere bei exothermem Reaktionsverlauf, Schwierigkeiten bei der Temperaturführung auf. Darüber hinaus ergeben sich Probleme bei der Handhabung des Endproduktes, da dieses als glasartige Schmelze anfällt.

Um diese Schwierigkeiten zu umgehen, ist auch vorgeschlagen worden, Dimethylsulfoxid als Lösungsmittel zu verwenden (DE-PS 28 16 100, Beispiel 1). Bei dieser Verfahrensvariante tritt jedoch ebenfalls eine unerwünschte exotherme Reaktion auf, die wegen einer unkontrollierten Freisetzung von Wärme eine kontrollierte Temperaturführung verhindert. Zudem ergeben sich auch nach Abkühlen des Reaktionsgemisches Schwierigkeiten, das gewünschte Endprodukt zu isolieren. Wie aus dem im experimentellen Teil vorgelegten Vergleichsbeispiel hervorgeht, kristallisiert das gewünschte Endprodukt nicht aus der Reaktionsmischung aus.

Demzufolge besteht ein Bedarf, ein Verfahren zur Herstellung phosphorhaltiger Dicarbonsäuren zu entwickeln, das die vorstehend genannten Nachteile beseitigt und sich technisch ohne großen Aufwand und unter Verwendung leicht zugänglicher Hilfsstoffe realisieren läßt. Darüber hinaus soll das Verfahren die gewünschten Produkte sowohl in hoher Ausbeute als auch in hoher Reinheit zugänglich machen.

Die Aufgabe wird überraschenderweise gelöst durch ein Verfahren zur Herstellung von phosphorhaltigen Dicarbonsäuren der Formel (I) 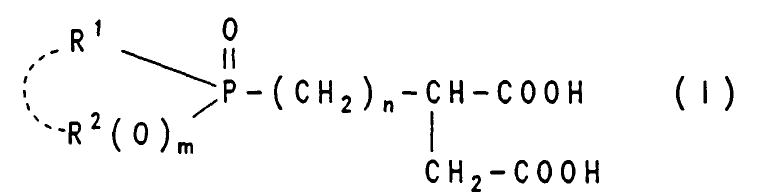 worin R¹ und R² gleich oder verschieden sind und für einen geradkettigen oder verzweigten Alkylrest mit 1 bis 8 Kohlenstoffatomen, einen cycloaliphatischen Rest mit 5 bis 6 Kohlenstoffatomen im Ring, einen unsubstituierten oder substituierten Arylrest mit 6 bis 10 Kohlenstoffatomen stehen oder R¹ und R² unter Einschluß des Phosphoratoms einen Ring mit 5 bis 8 Gliedern bilden, m und n jeweils unabhängig voneinander 0 oder 1 sind. Es ist dadurch gekennzeichnet, daß man eine Verbindung der Formel (II) 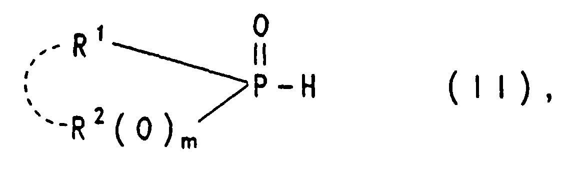 worin R¹, R² und m die vorstehend genannte Bedeutung haben mit Fumarsäure, Maleinsäure oder Itaconsäure in Gegenwart einer gesättigten aliphatischen Monocarbonsäure mit insgesamt 1 bis 5 Kohlenstoffatomen als Lösungsmittel bei 100 bis 200°C unter Normaldruck oder erhöhtem Druck umsetzt.

Die Umsetzung verläuft, unter Verwendung von Maleinsäure dargestellt, nach folgender Gleichung

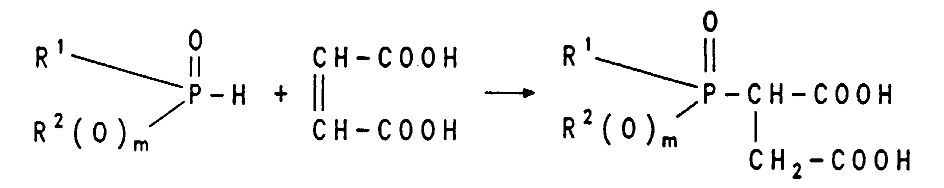

Es ist als überraschend anzusehen, daß bei Durchführung des erfindungsgemäßen Verfahrens ein unkontrollierbarer exothermer Reaktionsablauf vermieden werden kann und die gewünschten phosphorhaltigen Dicarbonsäuren nach beendeter Umsetzung aus dem anfallenden Reaktionsgemisch in der Regel auskristallisieren und hierbei in hoher und zum Teil in ausgezeichneter Reinheit anfallen.

Falls gewünscht oder erforderlich, kann man das eingesetzte Lösungsmittel abdestillieren und das dabei anfallende Gemisch zur Kristallisation bringen.

Häufig fallen jedoch die Endprodukte direkt in einer derartigen Reinheit an, wie sie für einen unmittelbaren Einsatz der phosphorhaltigen Dicarbonsäure als Comonomeres zur Herstellung schwer entflammbarer Polyester erforderlich ist. In diesen Fällen ist ein zusätzlicher Reinigungsschritt nicht mehr erforderlich.

Bei der Herstellung cyclischer Verbindungen der Formel (I) haben sich Verbindungen der Formel (II) bewährt, in denen R¹ und R² unter Einschluß des Phosphoratoms einen Ring mit 6 bis 7 Gliedern bilden. An dieser Stelle sei der Vollständigkeit halber darauf hingewiesen, daß das Sauerstoffatom, falls vorhanden (m = 1), als ein Glied in dem Ring mitgezählt wird.

In vielen Fällen hat es sich bewährt, eine Verbindung der Formel (II), worin R¹ und R² gleich oder verschieden sind und für ein geradkettigen oder verzweigten Alkylrest mit 1 bis 4 Kohlenstoffatomen, einen Cyclopentyl- oder Cyclohexylrest, einen Arylrest, der durch einen oder mehrere Halogen-, Alkyl-, Alkoxy- oder Arylreste substituiert ist, steht oder R¹ und R² unter Einschluß des Phosphoratoms einen unsubstituierten oder substituierten Oxaphosphorinring bilden, einzusetzen.

Von Interesse sind auch Verbindungen der Formel (II), worin R¹ und R² gleich sind und für einen Phenylrest oder einen durch eine oder zwei Alkylgruppen oder Alkoxygruppen mit jeweils 1 bis 4 Kohlenstoffatomen substituierten Phenylrest stehen und m = 0 ist.

Gut geeignet als Einsatzstoff sind Verbindungen der Formel (II), die einen Oxaphosphorinring enthalten. Insbesondere setzt man als Verbindung der Formel (II), die einen Oxaphosphorinring enthält, eine Verbindung der Formel (III) 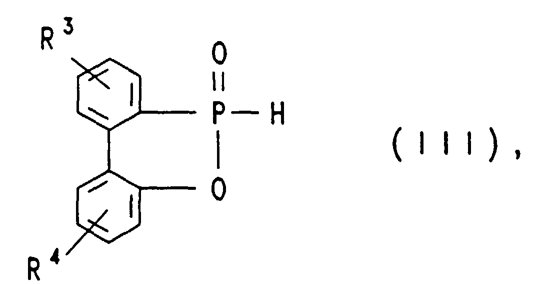 worin R³ und R⁴ gleich oder verschieden sind und für Halogen, einen Alkylrest mit 1 bis 4 Kohlenstoffatomen oder einen Alkoxyrest mit 1 bis 4 Kohlenstoffatomen steht, ein.

Ohne den Anspruch auf Vollständigkeit zu erheben, seien als geeignete Verbindungen der Formel (II) 6-H-Dibenz-[c,e][1,2]-oxaphosphorin-6-on, Dimethylphosphanoxid, Methyl-propylphosphanoxid, Diisopropylphosphanoxid, Di-n-butylphosphanoxid, Methyl-phenylphosphanoxid, Diphenylphosphanoxid oder Di-p-Tolylphosphanoxid genannt.

Das erfindungsgemäße Verfahren eignet sich besonders, die Verbindung der Formel (II) mit Itaconsäure umzusetzen, wobei man Verbindungen der Formel (I), worin n = 1 ist, erhält.

Üblicherweise setzt man die Fumarsäure, Maleinsäure oder Itaconsäure und die Verbindung der Formel (II) in stöchiometrischen Verhältnis oder die Fumarsäure, Maleinsäure oder Itaconsäure in einem gewissen Überschuß, bezogen auf die Verbindung der Formel (II), ein. Es empfiehlt sich, die Fumarsäure, Maleinsäure oder Itaconsäure und die Verbindung der Formel (II) im Molverhältnis (1 bis 1,25):1 einzusetzen.

Man führt die Umsetzung in Gegenwart einer gesättigten aliphatischen Monocarbonsäure als Lösungsmittel durch. Hierbei ist darauf zu achten, daß eine ausreichende Menge der aliphatischen, gesättigten Monocarbonsäure zugesetzt wird. Im allgemeinen setzt man die gesättigte, aliphatische Monocarbonsäure und die Verbindung der Formel (II) im Gewichtsverhältnis (6 bis 1,5):1 ein.

Man setzt als gesättigte, aliphatische Monocarbonsäure Ameisensäure, Essigsäure, Propionsäure, n-Buttersäure, i-Buttersäure, n-Valeriansäure, i-Valeriansäure oder Mischungen dieser Säuren als Lösungsmittel ein. Besonders geeignet als Lösungsmittel sind Essigsäure oder Propionsäure oder Mischungen derselben.

Man führt die Umsetzung, wie eingangs bereits erwähnt, bei 100 bis 200°C und insbesondere 115 bis 160°C durch. Besonders einfach gestaltet sich das Verfahren, wenn man die Reaktion bei der Siedetemperatur der jeweils verwendeten gesättigten aliphatischen Monocarbonsäure bzw. Monocarbonsäuregemisches durchführt. Sollte diese Temperatur zur Durchführung der Reaktion zu niedrig sein, so empfiehlt es sich, die Umsetzung unter erhöhtem Druck ablaufen zu lassen.

Die vorliegende Erfindung läßt sich sowohl kontinuierlich als auch diskontinuierlich durchführen. Sie eignet sich insbesondere für eine diskontinuierliche Arbeitsweise.

Die nachfolgenden Beispiele beschreiben die Erfindung, ohne sie darauf zu beschränken.

### Experimenteller Teil

### Beispiel 1

### Herstellung von 2-(6H-Dibenz-[c,e][1,2]-oxaphosphorinoxid-6-yl-methyl)bernsteinsäure

a) 151,2 g (0,7 mol) 6H-Dibenz-[c,e][1,2]-oxaphosphorin-6-on, 109,3 g (0,84 mol) Itaconsäure und 216,5 g Propionsäure werden unter Rühren 8 Stunden am Rückfluß gekocht, dann wird abgekühlt und 16 Stunden bei Raumtemperatur nachgerührt. Anschließend wird das angefallene kristalline Produkt abgesaugt, gewaschen und getrocknet. Man erhält 222 g Wertprodukt mit einem Schmelzpunkt von 197°C und einer 99,1 %igen Reinheit (bestimmt durch ³¹P-NMR-Spektrum). Dies entspricht einer Ausbeute von 92 % der Theorie, bezogen auf eingesetztes 6H-Dibenz-[c,e][1,2]-oxaphosphorin-6-on.
b) 53,1 g (0,246 mol) 6H-Dibenz[c,e][1,2]-oxaphosphorin-6-on, 32 g (0,246 mol) Itaconsäure und 75 ml Essigsäure werden in einem 250 ml V4A-Autoklav 8 Stunden bei 150°C und 1,5 bar umgesetzt. Dann wird abgekühlt, der Autoklav entleert und die anfallende Reaktionslösung durch Zusatz von Impfkristallen angeimpft. Anschließend wird mehrere Stunden nachgerührt, das sich dabei gebildete, kristallisierte Produkt wird abgesaugt, nachgespült und getrocknet.
Man erhält 70 g Wertprodukt mit einem Schmelzpunkt von 189 bis 193°C. Dies entspricht einer Ausbeute von 83 % der Theorie.

### Vergleichsbeispiel

### Herstellung von 2-(6H-Dibenz-[c,e][1,2]-oxaphosphorinoxid-6-yl-methyl)bernsteinsäure

Dieser Vergleichsversuch entspricht Beispiel 1 der DE-PS 28 16 100. 144 g (0,67 mol) 6H-Dibenz[c,e][1,2]-oxaphosphorin-6-on (in der DE-PS 28 16 100 als 9,10-Dihydro-9-oxa-10-phosphorphenanthren-10-oxid bezeichnet), 87 g (0,67 mol) Itaconsäure und 433 g Dimethylsulfoxid werden unter Rühren langsam erhitzt. Gleichzeitig wird durch ein Gaseinleitungsrohr langsam Stickstoff eingeleitet. Die Temperatur steigt jedoch infolge einer rasch einsetzenden exothermen Reaktion schnell an und erreicht bei 190°C Rückflußtemperatur. Die Wärmeentwicklung ist so stark, daß der aufgesetzte Rührer kaum ausreicht, die freigesetzte Wärme in ausreichendem Maße abzuführen. Nach einigen Minuten läßt der Rückfluß nach und nach 2 Stunden beträgt die Rückflußtemperatur nur noch 150 bis 165°C. Nach dem Abkühlen fällt ein Reaktionsgemisch an, aus dem keine Kristalle isoliert werden können.

### Beispiel 2

### Herstellung von 2-(6H-Dibenz-[c,e][1,2]-oxaphosphorinoxid-6-yl)bernsteinsäure

43,2 g (0,2 mol) 6H-Dibenz-[c,e][1,2]-oxaphosphorin-6-on, 23,2 g (0,2 mol) Fumarsäure und 95 g Propionsäure werden unter lebhaftem Rühren 20 Stunden zum Rückfluß erhitzt, dann wird gekühlt und die Propionsäure im Vakuum abdestilliert. Der Rückstand wird mit Acetonitril digeriert und die gebildete Kristallmasse abgesaugt. Eine Reinigung erfolgt durch Auskochen mit Wasser und anschließender Trocknung. Das Wertprodukt hat einen Zersetzungspunkt von 219°C.

| C₁₆H₁₃O₆P (332) | | | |
|---|---|---|---|
| ber. | 57,8 % C | 3,92 % H | 9,34 % P |
| gef. | 57,8 % C | 3,9 % H | 9,0 % P |

### Beispiel 3

### Herstellung von Diphenylphosphinylmethylbernsteinsäure

303 g (1,5 mol) Diphenylphosphanoxid, 214,5 g (1,65 mol) Itaconsäure und 470 g Propionsäure werden unter Stickstoffatmosphäre und unter lebhaftem Rühren 8,5 Stunden zum Rückfluß erhitzt. Dann wird abgekühlt. Nach Auskristallisieren werden zusätzlich 500 g Propionsäure zugegeben, abgesaugt, nachgespült und getrocknet. Man erhält 390 g Produkt mit einem Schmelzpunkt von 169 bis 172°C und einer 98,8 %igen Reinheit (bestimmt durch ³¹P-NMR-Spektrum). Aus dem Filtrat werden weitere 30 g Wertprodukt gewonnen. Die Gesamtausbeute beträgt 84 % der Theorie, bezogen auf eingesetztes Diphenylphosphanoxid.

| C₁₇H₁₇O₅P (332) | | | |
|---|---|---|---|
| ber. | 61,45 % C | 5,12 % H | 9,34 % P |
| gef. | 61,5 % C | 5,2 % H | 8,9 % P |

### Beispiel 4

### Herstellung von Dimethylphosphinylmethylbernsteinsäure

19,5 g (0,25 mol) Dimethylphosphanoxid, 35 g (0,27 mol) Itaconsäure und 77,5 g Propionsäure werden unter Stickstoffatmosphäre und unter lebhaftem Rühren 7,5 Stunden zum Rückfluß erhitzt. Nach dem Abkühlen wird die Propionsäure im Vakuum abdestilliert und der Rückstand mit 54 g Acetonitril digeriert. Man erhält 26 g Wertprodukt mit einem Schmelzpunkt von 138 bis 143°C. Das entspricht einer Ausbeute von 50 % der Theorie.

## Patentansprüche

1. Verfahren zur Herstellung von phosphorhaltigen Dicarbonsäuren der Formel (I) 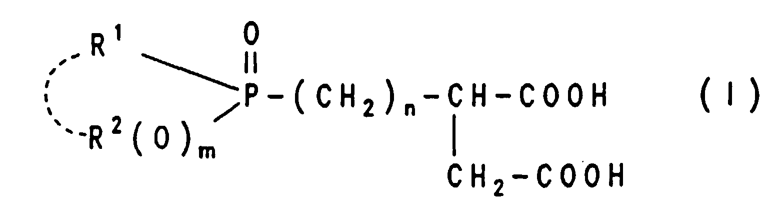 worin R¹ und R² gleich oder verschieden sind und für einen geradkettigen oder verzweigten Alkylrest mit 1 bis 8 Kohlenstoffatomen, einen cycloaliphatischen Rest mit 5 bis 6 Kohlenstoffatomen im Ring, einen unsubstituierten oder substituierten Arylrest mit 6 bis 10 Kohlenstoffatomen stehen oder R¹ und R² unter Einschluß des Phosphoratoms einen Ring mit 5 bis 8 Gliedern bilden, m und n jeweils unabhängig voneinander 0 oder 1 sind, dadurch gekennzeichnet, daß man eine Verbindung der Formel (II) 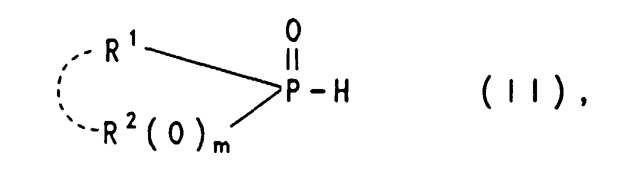 worin R¹, R² und m die vorstehend genannte Bedeutung haben mit Fumarsäure, Maleinsäure oder Itaconsäure in Gegenwart einer gesättigten aliphatischen Monocarbonsäure mit insgesamt 1 bis 5 Kohlenstoffatomen als Lösungsmittel bei 100 bis 200°C unter Normaldruck oder erhöhtem Druck umsetzt.

2. Verfahren nach Anspruch 1, dadurch gekennzeichnet, daß man eine Verbindung der Formel (II), worin R¹ und R² unter Einschluß des Phosphoratoms einen Ring mit 6 bis 7 Gliedern bilden, einsetzt.

3. Verfahren nach Anspruch 1 oder 2, dadurch gekennzeichnet, daß man eine Verbindung der Formel (II), worin R¹ und R² gleich oder verschieden sind und für einen geradkettigen oder verzweigten Alkylrest mit 1 bis 4 Kohlenstoffatomen, einen Cyclopentyl- oder Cyclohexylrest, einen Arylrest, der durch einen oder mehrere Halogen-, Alkyl-, Alkoxy- oder Arylreste substituiert ist, steht oder R¹ und R² unter Einschluß des Phosphoratoms einen unsubstituierten oder substituierten Oxaphosphorinring bilden, einsetzt.

4. Verfahren nach einem oder mehreren der Ansprüche 1 bis 3, dadurch gekennzeichnet, daß man eine Verbindung der Formel (II), worin R¹ und R² gleich sind und für einen Phenylrest oder einen durch eine oder zwei Alkylgruppen oder Alkoxygruppen substituierten Phenylrest stehen und m = 0 ist, einsetzt.

5. Verfahren nach einem oder mehreren der Ansprüche 1 bis 4, dadurch gekennzeichnet, daß man als Verbindung der Formel (II), die einen Oxaphosphorinring enthält, eine Verbindung der Formel (III) 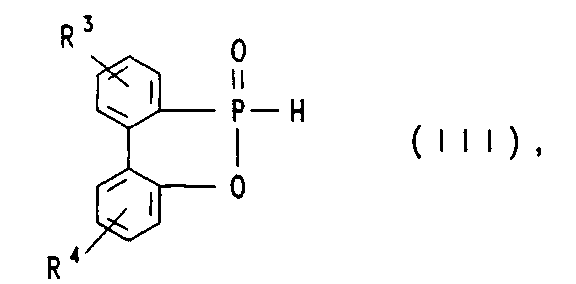 worin R³ und R⁴ gleich oder verschieden sind und für Halogen, einen Alkylrest mit 1 bis 4 Kohlenstoffatomen oder einen Alkoxyrest mit 1 bis 4 Kohlenstoffatomen steht, einsetzt.

6. Verfahren nach einem oder mehreren der Ansprüche 1 bis 5, dadurch gekennzeichnet, daß man als Verbindung der Formel (II) 6-H-Dibenz-[c,e][1,2]-oxaphosphorin-6-on, Dimethylphosphanoxid, Methylpropylphosphanoxid, Diisopropylphosphanoxid, Di-n-butylphosphanoxid, Methyl-phenylphosphanoxid, Diphenylphosphanoxid oder Di-p-Tolylphosphanoxid einsetzt.

7. Verfahren nach einem oder mehreren der Ansprüche 1 bis 6, dadurch gekennzeichnet, daß man die Verbindung der Formel II mit Itaconsäure umsetzt.

8. Verfahren nach einem oder mehreren der Ansprüche 1 bis 7, dadurch gekennzeichnet, daß man die Fumarsäure, Maleinsäure oder Itaconsäure, und die Verbindung der Formel (II) im Molverhältnis (1 bis 1,25):1 einsetzt.

9. Verfahren nach einem oder mehreren der Ansprüche 1 bis 8, dadurch gekennzeichnet, daß man die gesättigte aliphatische Monocarbonsäure und die Verbindung der Formel (II) im Gewichtsverhältnis (6 bis 1,5):1 einsetzt.

10. Verfahren nach einem oder mehreren der Ansprüche 1 bis 9, dadurch gekennzeichnet, daß man als gesättigte aliphatische Monocarbonsäure Essigsäure oder Propionsäure einsetzt.

11. Verfahren nach einem oder mehreren der Ansprüche 1 bis 10, dadurch gekennzeichnet, daß man die Umsetzung bei 115 bis 160°C durchführt.

## Claims

1. A process for preparing of phosphorus-containing dicarboxylic acids of the formula (I) 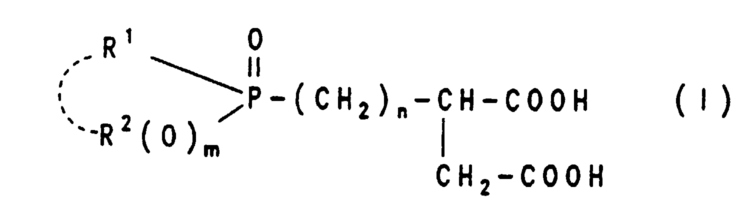 where R¹ and R² are identical or different and are each a straight-chain or branched alkyl radical having from 1 to 8 carbon atoms, a cycloaliphatic radical having 5 or 6 carbon atoms in the ring, an unsubstituted or substituted aryl radical having from 6 to 10 carbon atoms, or R¹ and R² form, with inclusion of the phosphorus atom, a ring having from 5 to 8 members, and m and n are each, independently of one another 0 or 1, which comprises reacting a compound of the formula (II) 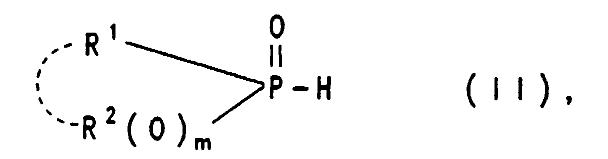 where R¹, R² and m are as defined above, with fumaric acid, maleic acid or itaconic acid in the presence of a saturated aliphatic monocarboxylic acid having a total of from 1 to 5 carbon atoms as solvent at from 100 to 200°C under atmospheric pressure or superatmospheric pressure.

2. The process as claimed in claim 1, wherein the compound of the formula (II) used is one in which R¹ and R² form, with inclusion of the phosphorus atom, a ring having 6 or 7 members.

3. The process as claimed in claim 1 or 2, wherein the compound of the formula (II) used is one in which R¹ and R² are identical or different and are each a straight-chain or branched alkyl radical having from 1 to 4 carbon atoms, a cyclopentyl or cyclohexyl radical, an aryl radical which is substituted by one or more halogen, alkyl, alkoxy or aryl radicals, or R¹ and R² form, with inclusion of the phosphorus atom, an unsubstituted or substituted oxaphosphorin ring.

4. The process as claimed in one or more of claims 1 to 3, wherein the compound of the formula (II) used is one in which R¹ and R² are identical and are each a phenyl radical or a phenyl radical substituted by one or two alkyl groups or alkoxy groups and m = 0.

5. The process as claimed in one or more of claims 1 to 4, wherein the compound of the formula (II) containing an oxaphosphorin ring which is used is a compound of the formula (III) 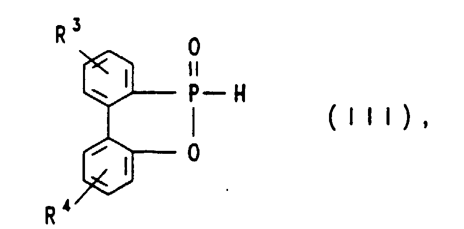 where R³ and R⁴ are identical or different and are each halogen, an alkyl radical having from 1 to 4 carbon atoms or an alkoxy radical having from 1 to 4 carbon atoms.

6. The process as claimed in one or more of claims 1 to 5, wherein the compound of the formula (II) used is 6H-dibenz-[c,e][1,2]-oxaphosphorin-6-one, dimethylphosphine oxide, methylpropylphosphine oxide, diisopropylphosphine oxide, di-n-butylphosphine oxide, methylphenylphosphine oxide, diphenylphosphine oxide or di-p-tolylphosphine oxide.

7. The process as claimed in one or more of claims 1 to 6, wherein the compound of the formula II is reacted with itaconic acid.

8. The process as claimed in one or more of claims 1 to 7, wherein the fumaric acid, maleic acid or itaconic acid and the compound of the formula (II) are used in a molar ratio of (1 to 1.25):1.

9. The process as claimed in one or more of claims 1 to 8, wherein the saturated aliphatic monocarboxylic acid and the compound of the formula (II) are used in a weight ratio of (6 to 1.5):1.

10. The process as claimed in one or more of claims 1 to 9, wherein the saturated aliphatic monocarboxylic acid used is acetic acid or propionic acid.

11. The process as claimed in one or more of claims 1 to 10, wherein the reaction is carried out at from 115 to 160°C.

## Revendications

1. Procédé de préparation d'acides dicarboxyliques phosphorés de formule (I) : 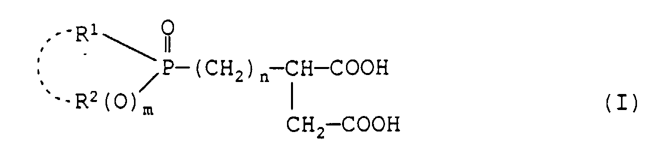 dans laquelle R¹ et R² sont identiques ou différents et représentent un résidu alkyle à chaîne droite ou ramifiée ayant de 1 à 8 atomes de carbone, un résidu cyclo-aliphatique dont le noyau comprend 5 à 6 atomes de carbone, un résidu aryle non substitué ou substitué ayant de 6 à 10 atomes de carbone, ou bien R¹ et R² forment en incluant l'atome de phosphore, un noyau de 5 à 8 membres ; m et n valent indépendamment l'un de l'autre 0 ou 1, caractérisé en ce que l'on fait réagir un composé de formule (II) : 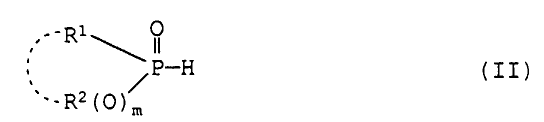 dans laquelle R¹, R² et m ont les significations indiquées ci-dessus, avec de l'acide fumarique,de l'acide maléique ou de l'acide itaconique en présence d'un acide monocarboxylique aliphatique saturé ayant au total de 1 à 5 atomes de carbone comme solvant, à une température de 100 à 200°C et sous la pression normale ou une pression plus élevée.

2. Procédé selon la revendication 1, caractérisé en ce que l'on utilise un composé de formule (II) dans laquelle R¹ et R² forment, en incluant l'atome de phosphore un noyau de 6 à 7 membres,

3. Procédé selon la revendication 1 ou 2, caractérisé en ce que l'on utilise un composé de formule (II) dans laquelle R¹ et R² sont identiques ou différents et représentent un résidu alkyle à chaîne droite ou ramifiée ayant de 1 à 4 atomes de carbone, un résidu cyclopentyle ou cyclohexyle, un résidu aryle substitué par un ou plusieurs résidus halogène, alkyle, alcoxy ou aryle, ou bien R¹ et R² forment, en incluant l'atome de phosphore , un noyau oxaphosphorine non substitué ou substitué.

4. Procédé selon l'une ou plusieurs des revendications 1 à 3, caractérisé en ce que l'on utilise un composé de formule (II) dans laquelle R¹ et R² sont identiques et représentent un résidu phényle ou bien un résidu phényle substitué par un ou deux groupes alkyle ou groupes alcoxy et m = 0.

5. Procédé selon l'une ou plusieurs des revendications 1 à 4, caractérisé en ce que l'on utilise comme composé de formule (II) contenant un noyau oxaphosphorine un composé de formule (III) : 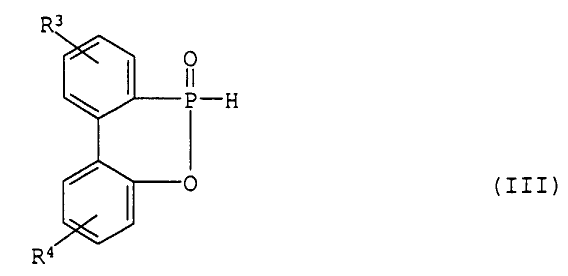 dans laquelle R³ et R⁴ sont identiques ou différents et représentent de l'halogène, un résidu alkyle ayant de 1 à 4 atomes de carbone ou un résidu alcoxy ayant de 1 à 4 atomes de carbone.

6. Procédé selon l'une ou plusieurs des revendications 1 à 5, caractérisé en ce que l'on utilise comme composé de formule (II) la 6-H-dibenzo[c,e][1,2]-oxaphosphorin-6-one, le diméthylphosphanoxyde, le méthylpropylphosphanoxyde, le diisopropylphosphanoxyde, le di-n-butylphosphanoxyde, le méthylphénylphosphanoxyde, le diphénylphosphanoxyde ou le di-p-tolylphosphanoxyde.

7. Procédé selon l'une ou plusieurs des revendications 1 à 6, caractérisé en ce que l'on fait réagir le composé de formule (II) avec de l'acide itaconique.

8. Procédé selon l'une ou plusieurs des revendications 1 à 7, caractérisé en ce que l'on utilise l'acide fumarique, l'acide maléique ou l'acide itaconique et le composé de formule (II) selon le rapport molaire de (1 à 1,25):1.

9. Procédé selon l'une ou plusieurs des revendications 1 à 8, caractérisé en ce que l'on utilise l'acide monocarboxylique aliphatique saturé et le composé de formule (II) selon un rapport en poids de (6 à 1,5):1.

10. Procédé selon l'une ou plusieurs des revendications 1 à 9, caractérisé en ce que l'on utilise comme acide monocarboxylique aliphatique saturé l'acide acétique ou l'acide propionique.

11. Procédé selon l'une ou plusieurs des revendications 1 à 10, caractérisé en ce que la réaction se fait à une température de 115 à 160°C.
